Europäisches Patentamt

European Patent Office

Office européen des brevets

(11) Publication number: **0 138 317**
**B1**

# EUROPEAN PATENT SPECIFICATION

(45) Date of publication of patent specification: **22.02.89**

(51) Int. Cl.⁴: **F 16 J 15/34**

(21) Application number: **84305363.8**

(22) Date of filing: **07.08.84**

(60) Divisional application 87113735 filed on 19.09.87.

(54) Improved mechanical seal.

| | |
|---|---|
| (30) Priority: **29.09.83 US 537229** | (73) Proprietor: **BORG-WARNER CORPORATION**<br>**200 South Michigan Avenue**<br>**Chicago Illinois 60604 (US)** |
| (43) Date of publication of application:<br>**24.04.85 Bulletin 85/17** | (72) Inventor: **Wiese, Winfred John**<br>**14821 Hayward Street**<br>**Whittier California 90603 (US)** |
| (45) Publication of the grant of the patent:<br>**22.02.89 Bulletin 89/08** | |
| (84) Designated Contracting States:<br>**CH DE FR GB LI NL** | (74) Representative: **Allden, Thomas Stanley et al**<br>**A.A. THORNTON & CO. Northumberland House**<br>**303-306 High Holborn**<br>**London WC1V 7LE (GB)** |
| (56) References cited:<br>**GB-A- 945 265**<br>**US-A-3 360 272**<br>**US-A-3 479 040**<br>**US-A-4 114 900**<br>**US-A-4 174 844** | |

Courier Press, Leamington Spa, England.

## Description

This invention relates to high pressure mechanical seal assemblies constructed and used to prevent the uncontrolled leakage of a liquid along a rotating shaft, as for example, leakage along the shaft of a rotary liquid pump.

In US—A—4 174 844 there is generally disclosed a mechanical seal assembly for substantially preventing the flow of a fluid along a rotatable shaft from a high pressure region to a lower pressure region, the seal assembly being associated with a housing and comprising a pair of relatively roatatable seal rings having opposed seal faces, one seal ring being connected to the shaft and the other other seal ring being connected to the housing and spaced from the shaft, a back-up ring for the other seal ring and spaced from the shaft, the back-up ring being constructed of a material having a different modulus of elasticity than the other seal ring, the other seal ring and the back-up ring having annular mating faces, and a generally cylindrical member closedly surrounding the other seal ring and the back-up ring and exposed at its radially outer surface to high pressure fluid in the high pressure region.

More particularly, the other seal ring is constructed of a relatively brittle, soft material, specifically carbon, whereas the opposing seal ring is constructed of a harder material, specifically steel or tungsten carbide. The back-up ring for the carbon seal ring is constructed of a harder, rigid material, such as steel. The mating faces of the relatively brittle, soft seal ring and the back-up ring are lapped, so that the carbon ring becomes stuck or "married" to the back-up ring. Because of the considerable difference in the modulus of elasticity between the two materials of the seal ring and the back-up ring, i.e. carbon with a modulus of about $2 \times 10^6$ to about $4 \times 10^6$ and 18—8 stainless steel with a modulus of about $30 \times 10^6$, a compressive load on the mated rings will cause the carbon ring to shrink more diametrically than the back-up ring. The carbon ring, being married to the back-up ring, will shrink more at its seal or running face, so that this fact becomes concave which seriously affects the sealing area of the distorted face, leading perhaps to failure of the seal. The compressive load is mainly due to excessive differentials of the pressures on the radially inside and outside surfaces of the married rings, as will exist in a rotary liquid pump used for extreme and widely changing conditions of pressures and temperatures.

In accordance with the present invention, the aforesaid generally disclosed mechanical seal assembly is characterised in that a first zone communicates with the lower pressure region and is bounded in part by radially inner surfaces of the other seal ring and the back-up ring, the generally cylindrical member forms with the radially outer surfaces of the other seal ring and the back-up ring a second zone sealed from high pressure fluid in the high pressure region, and passage means communicates the first zone and the second zone so that low pressure fluid from the low pressure region will exist on the radially inner and outer surfaces of the other seal ring and the back-up ring.

The invention has the advantage in that by so equalising the fluid pressures on the radially inner and other surfaces of the other seal ring and the back-up ring, distortion of the other seal ring and the back up ring which would otherwise occur, as discussed, when the two rings are made of materials having a considerable difference in the modulus of elasticity, because of excessive pressure differentials between their radially inner outer surfaces, is substantially prevented.

Preferred embodiments of the present invention have been developed especially for use with nuclear reactor coolant pumps, boiler recirculating pumps, boiler feed pumps and pipeline pumps, and will meet the requirements for extreme and widely changing conditions of pressures and temperatures encountered in these uses, it being understood a mechanical seal assembly constructed in accordance with the present invention can also be used in less demanding installations. As an example of the widely changing pressures and temperature, the normal operating pressure in a pressurized water reactor is about 2200 psig ($1,517 \times 10^7$ Pa gauge pressure), and during start-up, the pressure can be a low as 20 to 30 psig ($1,38$ to $2.07) \times 10^5$ Pa gauge pressure). In such a reactor, the water in a coolant loop can reach a temperature of about 315°C (600°F), while the water entering the seal area may be as low as about 27°C (80°F). In these pumps, the pump shaft may move axially and may also wobble or deflect radially. An additional rigorous operating condition for the seals in such application is the combination of high pressure and high surface speeds which result from large diameter parts. It is thus necessary to construct a mechanical seal assembly capable of performing under these operational conditions.

In the preferred embodiments, the mechanical seal assembly comprises the combination of a rotatable seal ring and a stationary seal ring, the seal rings having seal faces which oppose one another and across which the flow of a fluid from a high pressure zone to a low pressure zone along the rotatable shaft is substantially prevented. The rotatable seal ring, is made of a carbide material, and the stationary seal ring, or at least its seal face, is made of a softer material, such as carbon. The stationary seal ring has a rear face mating with a face of the back-up ring and the back-up ring is supported for limited axial movement on a cylindrical balance sleeve surrounding the shaft. The balance sleeve has a stepped outer surface and there is provided an annular surface exposed to high pressure fluid. The balance sleeve is received in a cylindrical cavity in a seal flange of a housing and is biased by fluid pressure on its annular surface to ensure its seating in the cavity. The back-up ring and the stationary seal ring are resiliently urged toward the rotating seal ring by a plurality of coil springs.

The preferred mechanical seal assembly is constructed in such a manner to substantially, if not totally, eliminate compressive loads on the outer periphery of the softer seal ring which causes distortions and deflections of this seal ring and leads to failure of the seal assembly. This is accomplished by encircling the softer seal ring and its back-up ring with a cylindrical member, and by providing one or more passages in the seal ring and back-up ring sub-assembly to ensure equalization of fluid pressures on their radially inner and outer surfaces. The fit of the cylindrical member around the seal ring and its back-up ring is such to permit fluid to exist therebetween and the radially outer surface of the cylindrical member is exposed to the high pressure fluid. Also, the seal ring and back-up ring subassembly is constructed so that axial fluid pressure on the back-up ring is sufficient to ensure sealing of the mating faces of the soft seal ring and the back-up ring, and to limit the transmissions of deflections of the back-up ring to the softer seal ring. Axial fluid pressures on the opposite sides of the stationary seal ring are substantially balanced, which ensures little, if any, deflections of the softer seal ring which could be caused by axial pressure differentials.

In order that the invention may be well undersood the preferred embodiments thereof, given by way of example, will now be described with reference to the accompanying drawing, in which:

Fig. 1. is a partial cross-sectional view of the preferred embodiment of this invention, and

Fig. 2 is a partial cross-section view of a second embodiment of, this invention.

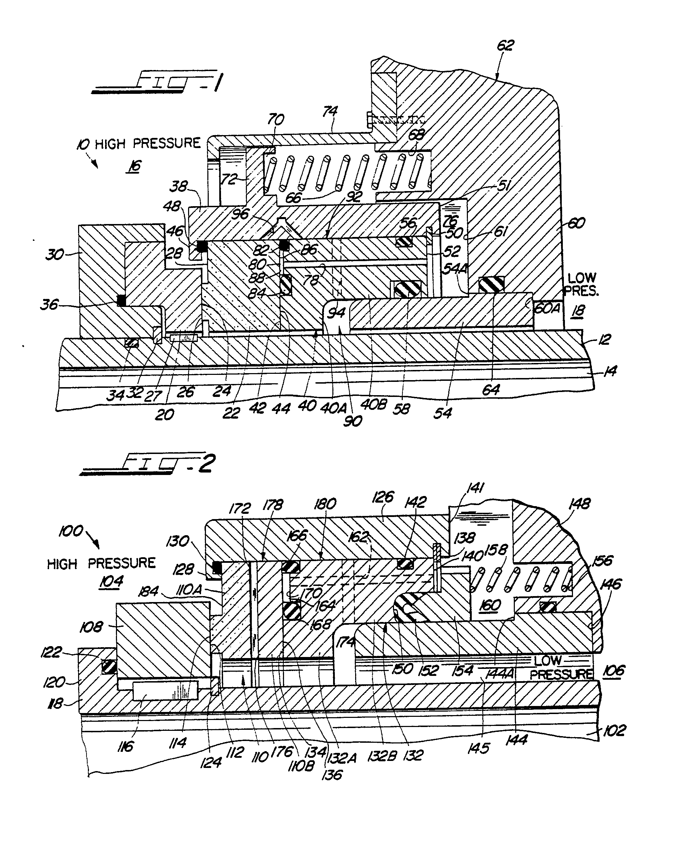

Referring first to Fig. 1, a mechanical seal assembly 10 is shown which can be used as a single seal or in a more comprehensive assembly, a multiple stage mechanical seal. The seal assembly 10 comprises a shaft sleeve 12 adapted to be positioned over and connected (by means not shown) to a shaft 14, the seal substantially preventing the flow of fluid along the shaft 14 from a high pressure region or zone 16; for example, a pump (not shown), to a low pressure region or zone 18, for example, a motor (also not shown). A gasket (not shown) is provided between the sleeve 12 and the shaft 14 to prevent the flow of fluid therebetween.

The seal assembly 10 further comprises a rotating seal ring 20 of a carbide material and a stationary seal ring 22, the rings 20 and 22 being spaced from the shaft sleeve 12 and having lapped seal faces 24, 26 opposing one another, the face 26 being an annular surface with an ID greater than the ID of the ring 20 and an OD less than that of the ring 20. A surface 28 of the ring 22 is exposed to high pressure fluid in the region 16. The seal ring 20 is connected to the sleeve 12 by a key 27 or by other suitable well known means and has a rear portion received in a retainer 30 positioned on the shaft 14 by a split ring 32 received in complementary grooves in the sleeve 12 and the retainer 30. The retainer 30 is sealed to the sleeve 12 by an O-ring 34 and to the ring 20 by an O-ring 36.

The seal ring 22, the relatively softer seal ring in this embodiment and preferably constructed of carbon, is encircled by a generally cylindrical member 38 which also encircles a back-up ring 40. The fit between the member 38 and the rings 22 and 40 is such that fluid can be present therebetween. The back-up ring 40 is also spaced from the shaft sleeve 12 and has an annular face portion 42 abutting a rear face portion 44 of the ring 22. The member 38 has a radial depending flange 46 sealed to the surface 28 of the ring 22 by an O-ring 48. A snap ring 50, which fits in a groove in the member 38 and abuts a rear face 52 of the back-up ring 40, holds the rings 22 and 40 in their proper, abutting positions. The back-up ring 40 has a first cylindrical portion 40A and a second cylindrical portion 40B which is mounted on a cylindrical balance sleeve 54 for limited axial movement. The balance sleeve 54 encircles the shaft sleeve 12 and is spaced therefrom, such that low pressure fluid from the low pressure region 18 exists between the shaft sleeve 12 and the rings 20, 22 and 40. An O-ring 56 encircles the back-up ring 40 and seals an end thereof with the member 38, and an O-ring 58 encircles the balance sleeve 54 and seals the sleeve 54 with the rear portion 40B of the back-up ring 40 while permitting the limited axial movement of the back-up ring 40 relative to the balance sleeve 54. The balance sleeve 54 is sealed to a seal flange 60 of an housing 62 by an O-ring 64, and has its outer diameter stepped to provide an annular, radially disposed surface 54A. The balance sleeve 54 abuts a shoulder 60A of the housing flange 60, and fluid pressure on the surface 54A biases the balance sleeve against the shoulder 60A to ensure the seating of the sleeve 54 in the housing flange 60. The housing flange 60 is part of a more comprehensive housing 62, not all of which is shown.

Coil springs 66, only one of which is shown in Fig. 1, bias the subassembly of the seal ring 22, the back-up ring 40 and the member 38 towards the rotatable seal ring 20. The springs 66 are each received in respective spring pockets 68 in the housing 62 and spring pockets 70 in an outwardly extending radial flange 72 of the member 38. The springs 66 are essentially enclosed by a generally cylindrical cover 74 which encircles the flange 72 of the member 38 and is bolted to the housing flange 60.

The rear surface 52 of the back-up ring 40, the rear surface 51 of the member 38 and the annular surface 61 of the housing flange 60, cooperatively define an annular cavity 76 open to high pressure fluid. The back-up ring 40 is axially drilled at 78 to provide a fluid passageway between the cavity 76 and a cavity 80, the cavity 80 being defined by O-rings 82, 84, a portion 86 of the rear face 44 of the seal ring 22, and a reduced portion 88 of the front face 42 of the back-up ring 40. The effective pressure on the face 86 is substantially the same as on the face 28. Thus, the fluid pressures on opposite ends of the seal ring 22 are substantially the same.

The radially inner surfaces of the stationary seal ring 22 and its back-up ring 40 are spaced from the shaft sleeve 12 and define, with the shaft sleeve 12, a first zone 90 communicating with the low pressure zone 18, and the radially outer surfaces of the seal ring 22 and the back-up ring 40 define, with the member 38, a second zone 92. To ensure that the pressure on the radially outside surface of the seal ring 22 in the zone 92 is the same as on the radially inside surface of the seal ring 22 in the zone 90, the back-up ring 40 is radially drilled to provide a third passage 94 and the member 38 is angularly drilled to provide a fluid passage 96 bridging the O-ring 2. Because the pressure on the radially inner and outer surfaces of the seal ring 22 and the back-up ring 40 is the same or substantially the same, compressive loads due to pressure differentials do not exist and distortions and deflections of the softer seal ring 22 which are usually caused by such pressure differentials are completely or substantially eliminated.

Fig. 2 illustrates a second embodiment of this invention and shows a mechanical assembly 100 for substantially preventing the flow of fluid along a shaft 102 from a high pressure region or zone 104 to a low pressure region or zone 106. The seal assembly 100 comprises rotatable seal ring 108 again of a carbide material and a stationary seal ring 110, having faces 112, 114, respectively, opposed to one another. The seal ring 108 is keyed by a key 116 to a shaft sleeve 118 and its end abuts a sleeve flange 120, being sealed thereto by an O-ring 122. The axial position of the ring 108 is fixed by a snap ring 124, as illustrated.

The stationary seal ring 110 is a composite, constructed of a carbon face portion 110A and a metal backing portion 110B, and is encircled by a generally cylindrical member 126 which has an inwardly directed flange 128 sealed to the ring 110 by an O-ring 130. A back-up ring 132 has a first cylindrical portion 132A and a rearwardly extending cylindrical portion 132B. The portion 132A has an annular face portion 134 abutting a rear face 136 of the ring 110. The back-up ring 132 is also encircled by the member 126. The fit between the seal ring 110, the back-up ring 132 and the member 126 is such that fluid can be present therebetween. A snap ring 138 abutting a rear face 140 of the ring 132 ensures the proper positioning of the rings 110 and 132 within the base of the member 126, and an O-ring 142 encircles the ring 132 at a location adjacent to the snap ring 138, thus sealing the juncture of the ring 132 and the meber 126. The portion 132B of the ring 132 encircles a balance sleeve 144, which in turn encircles and is spaced from the shaft sleeve 118. The seal ring 110, the back-up ring 132 and the bgalance sleeve 144 are all spaced from the shaft sleeve 118, so that an annular space or zone 145 between the seal ring 110, the back-up ring 132 and the balance sleeve 144 is open to the low pressure zone 106. The balance sleeve 144 has its outer periphery stepped to provide an annular, radially disposed surface 144A. The sleeve 144 abuts a shoulder 146 of an housing flange 148. The pressure on the surface 144A biases the balance sleeve 144 against the shoulder 146 to ensure seating of the sleeve 144 in the housing flange 148. A cavity 150 in the ring 144 receives an elastomer U-cup 152 and a bull-nosed U-cup follower 154. Pockets 156 in the housing flange 148 each receive a spring 158 to bias the follower 154, the back-up ring 132, and the seal ring 110 toward the seal ring 108.

The gear surfaces 140 of the back-up ring 132 and 141 of the member 126 are exposed to high pressure fluid in a cavity 160, and the ring 132 is axially drilled, as at 162, to communicate high pressure fluid to an annular cavity 164 defined by O-rings 166, 168, a portion of the rear face 136 of the ring portion 110B and a reduced part 170 of the face 134 of the back-up ring 132. The springs 158 ensure seating of the faces 134 and 136 of the back-up ring 132 and the seal ring 110. The back-up ring 132 and a front face 172 of the metal ring portion 110B are radially drilled at 174 and the front face 172 of the metal ring portion 110B is radially grooved at 176 to provide communication between the zone 145 and a zone 180 and also between the zones 145 and 180. Thus the pressure on the radially outside surfaces of the rings 110 and 132 is essentially the same as the pressure on the radially inside surfaces of these rings. By so substantial eliminating pressure differentials on the radially inside surfaces and the radially outside surfaces of the seal ring 110 and the back-up ring 132, compressive loads on the ring portion 110A are substantially eliminated. Also, the pressure on a front face portion 184 of the ring portion 110A is essentially the same as that in the cavity 164, so that axial fluid pressures on the ring 110 are essentially balanced.

The O-ring seals where used are generally made of elastomeric materials, such as synthetic rubber and the like.

The present specification contains common subject matters with that of European patent application No. 87113735.2 (published as EP—A—258910) which has been divided from the present specification.

## Claims

1. A mechanical seal assembly (10; 100) for substantially preventing the flow of a fluid along a rotatable shaft (14; 102) from a high pressure region (16; 104) to a lower pressure region (18; 106), the seal assembly being associated with a housing (62; 148) and comprising a pair of relatively rotatable seal rings (20, 22; 108, 110) having opposed seal faces (24, 26; 112, 114), one seal ring (20; 108) being connected to the shaft and the other seal ring (22; 110) being connected to the housing and spaced from the shaft, a back-up ring (40; 132) for the other seal ring and spaced from the shaft, the back-up ring being constructed of a material having a different modulus of elasticity than the other seal ring, the other seal ring and the back-up ring having annular mating faces (42, 44; 134, 136), and a generally cylindrical member (38; 126) closely surrounding the other seal ring and the back-up ring and exposed at its radially outer surface to high pressure fluid in the high pressure region, characterised in that a first zone (90; 182) communicates with the lower pressure region and is bounded in part by radially inner surfaces of the other seal ring and the back-up ring, the generally cylindrical member forms with radially outer surfaces of the other seal ring and the back up ring a second zone (92; 178, 180) sealed from high pressure fluid in the high pressure region, and passage means (94, 96; 174, 176) communicates the first zone and the second zone so that low pressure fluid from the low pressure region will exist on the radially inner and outer surfaces of the other seal ring and the back-up ring.

2. A mechanical seal assembly as claimed in claim 1, wherein the back-up ring (40; 132) has an annular surface (52; 140) exposed to high pressure fluid in the high pressure region (16; 104), and further comprising an annular chamber (80, 164) between the other seal ring (22; 110) and the back-up ring, and a passage (78; 162) communicating the annular chamber and the high pressure region for the passage of high pressure fluid therebetween.

3. A mechanical seal assembly as claimed in claim 2, wherein an annular front surface (26; 114) on the other seal ring (22; 110) is exposed to high pressure fluid in the high pressure region (16; 104) and an annular back surface (86; 136) of the other seal ring further defines the annular chamber (80; 164).

4. A mechanical seal assembly as claimed in any of the preceding claims, further comprising a cylindrical balance sleeve (54; 144) surrounding and spaced from the shaft (14; 102), the balance sleeve having a first diameter portion supporting the back-up ring (40; 132) and a second and larger diameter portion received in a recess (60A, 146) in the housing (62; 148), the first and second diameter portions defining an annular shoulder surface (54A, 144A) exposed to fluid in the high pressure region (16; 104), the fluid pressure of which biases the balance sleeve towards the recess to ensure it being seated in the recess.

5. A mechanical seal assembly as claimed in any of the preceding claims, further comprising a shaft sleeve (12; 118) closely surrounding the shaft (14; 102), the other seal ring (22; 110) being connected to the shaft sleeve.

6. A mechanical seal assembly as claimed in any of the preceding claims, wherein a passage (94; 174) of the passage means (94, 96; 174, 176) is located in the back-up ring (40; 132) to communicate its radially inner and outer surfaces with each other for the passage of low pressure fluid therebetween.

7. A mechanical seal assembly as claimed in claim 6, wherein a passage (96) of the passage means (94, 96) is located in the cylindrical member (38) to communicate the radially outer surface of the back-up ring (40) with the radially outer surface of the other seal ring (22) for the passage of low pressure fluid therebetween.

8. A mechanical seal assembly as claimed in any of the preceding claims, wherein the other seal ring (22) is carbon and the back-up ring (40) is steel.

9. A mechanical seal assembly as claimed in any of claims 1 to 6, wherein a passage (176) of the passage means (174, 176) is located in the other seal ring (110) to communicate its radially inner and outer surfaces with each other for the passage of low pressure fluid therebetween.

10. A mechanical seal assembly as claimed in any of claims 1 to 6 or claim 9, wherein the other seal ring (110) is a composite of carbon and steel.

**Patentansprüche**

1. Gleitringdichtung (10; 100), die den Strom eines Strömungsmittels entlang einer rotierenden Welle (14; 102) von einem Hockdruckbereich (16; 104) zu einem Niederdruckbereich (18; 106) im wesentlichen unterbindet, wobei die Gleitringdichtung einem Gehäuse (62; 148) zugeordnet ist und besteht aus zwei relativ zueinander drehbaren, mit entgegengerichteten Dichtfläche (24, 26; 112, 114) versehenen Dichtringen (20, 22; 108, 110), von denen der eine Dichtring (20; 108) mit der Welle verbunden ist und der andere Dichtring (20; 110) mit dem Gehäuse verbunden und zur Welle beabstandet ist, einem Stützring (40; 132) für den anderen Dichtring, der zu der Welle beabstandet ist und der aus einem Material besteht, dessen Elastizitätsmodul von dem des Dichtringes veschieden ist, wobei der andere Dichtring und der Stützring ringförmige, aufeinander abgestimmte Flächen (42, 44; 134, 136) aufweist, und einem ungefähr zylindrischen Bauteil (38; 126), das den anderen Dichtring und den Stützring eng umgibt und an seiner radial äußeren Oberfläche dem Hochdruck-Strömungsmittel in dem Hochdruckbereich ausgesetzt ist, dadurch gekennzeichnet, daß eine erste Zone (90; 182) mit dem Niederdruckbereich in Verbindung steht und teilweise von den radial inneren Oberflächen des anderen Dichtringes und des Stützringes begrenzt wird, wobei das ungefähr zylindrische Bauteil mit radial äußeren Oberflächen des anderen Dichtrings und des Stützringes eine zweite Zone (92; 178, 180) bildet, das gegen das Hockdruck-Strömungsmittel im Hochdruckbereich abgedichtet ist, und eine Strömungsverbindung (94, 96; 174, 176) zwischen der ersten Zone und der zweiten Zone vorgesehen ist, so daß das Niederdruck-Strömungsmittel aus dem Niederdruckbereich an den radial inneren und äußereen Oberflächen des anderen Dichtringes und des Stützringes vorhanden ist.

2. Gleitringdichtung nach anspruch 1, bei der der Stützring (40, 132) eine ringförmige Oberfläche (52; 140) aufweist, die dem Hockdruck-Strömungsmittel in dem Hockdruckbereich (16; 104) ausgesetzt ist, und welche ferner einer Ringkammer (80, 164) zwischen dem anderen Dichtring (22; 110) und dem Stützring sowie einen Kanal (78; 162) aufweist, der die Ringkammer und den Hochdruckbereich für den Duchgang von Hochdruck-Strömungsmittel miteinander verbindet.

3. Gleitringdichtung nach Anspruch 2, bei der eine ringförmige Stirnfläche (26; 114) an dem anderen Dichtring (22; 110) dem Hockdruck-Strömungsmittel im Hockdruckbereich (16; 104) ausgesetzt ist und eine ringförmige Gegenfläche (86; 136) an dem anderen Dichtring die Ringkammer (80, 164) weiter begrenzt.

4. Gleitringdichtung nach einem der vorhergehenden Ansprüche, welche ferner eine zylindrische Ausgleichshüle (54; 144) aufweist, die die Welle (14; 102) umgibt und zu ihr beabstandet ist, wobei die Ausgleichshülse einen den Stützring (40; 132) abstützenden Abschnitt eines ersten Durchmessers und einen in einer Ausnehmung (60a, 146) des Gehäuses (62; 148) aufgenommenen Abschnitt eines zweiten und größeren Durchmessers aufweist, wobei die Abschnitte des ersten und zweiten Durchmessers eine ringförmige Schulterfläche (54A; 144A) definieren, der dem Strömungsmittel in dem Hockdruckbereich (16; 104) ausgesetzt ist, dessen Strömungsmitteldruck die Ausgleichshülse in Richtung auf die Ausnehmung vorspannt, um sicherzustellen, daß sie in der Ausnehmung einsitzt.

5. Gleitringdichtung nach einem der vorhergehenden Ansprüche, die ferner eine Wellenhülse (12; 118) aufweist, die die Welle (14; 102) eng umgibt, wobei der andere Dichtring (22; 110) mit der Wellenhülse verbunden ist.

6. Gleitringdichtung nach einem der vorhergehenden Ansprüche, bei der ein Kanal (94; 174) der Strömungsverbindung (94, 96; 174, 176) in dem Stützring (40, 132) angeordnet ist, um seine radial inneren und äußeren Oberflächen für den Durchtritt von Niederdruck-Strömungsmittel miteinander zu verbinden.

7. Gleitringdichtung nach Anspruch 6, bei der ein Kanal (96) der Strömungsverbindung (94, 96) in dem zylindrishen Bauteil (38) angeordnet ist, um die radial äUßere Oberfläche des Stützrings (40) mit der radial äußeren Oberfläche des anderen Dichtringes (22) für den Durchtritt von Niederdruck-Strömungsmittel zu verbinden.

8. Gleitringdichtung nach einem der vorhergehenden Ansprüche, bei der der andere Dichtring (22) aus Kohlenstoff und der Stützring (40) aus Stahl besteht.

9. Gleitringdichtung nach einem der Ansprüche 1—6, bei der ein Kanal (176) der Strömungsverbindung (174, 176) in dem anderen Dichtring (110) angeordnet ist, um seine radial inneren und äußeren Oberflächen für den Durchtritt von Niederdruck-Strömungsmittel miteinander zu verbinden.

10. Gleitringdichtung nach einem der Ansprüche 1—6 oder 9, bei der der andere Dichtring (110) aus einer Zusammensetzung aus Kohlenstoff und Stahl besteht.

**Revendications**

1. Joint mécanique (10; 100) pour éviter pratiquement l'écoulement d'un fluide le long d'un arbre rotatif (14; 102) entre une région de haute pression (16; 104) et une région de pression plus faible (18; 106); le joint étant associé à un logement (62; 148) et comprenant une paire de bagues d'étanchéité pouvant tourner l'une par rapport à l'autre (20, 22; 108, 110) ayant des faces d'étanchéité opposées (24, 26; 112, 114), une bague d'étanchéité (20; 108) étant reliée à l'arbre et l'autre bague d'étanchéité (22; 110) étant reliée au logement et espacée de l'arbre, une bague d'appui (40; 132) pour l'autre bague d'étanchéité et espacée de l'arbre, la bague d'appui étant constituée d'un matériau ayant un module d'élasticité différent de celui de l'autre bague d'étanchéité, l'autre bague d'étanchéité et la bague d'appui présentant des faces annulaires d'accouplement (42, 44; 134, 136), et un élément généralement cylindrique (38; 126) entourant étroitement l'autre bague d'étanchéité et la bague d'appui et étant exposé à sa surface radialement extérieure au fluide à haute pression dans la région de haute pression, caractérisé en ce qu'une première zone (90; 182) communique avec la région à pression plus faible et est limitée en partie par des surfaces radialement intérieures de l'autre bague d'étanchéité et de la bague d'appui, l'élément généralement cylindrique forme avec les surfaces radialement extérieures de l'autre bague d'étanchéité et de la bague d'appui une second zone (92; 178, 180) rendue étanche contre le fluide à haute pression dans la région de haute pression, et un moyen de passage (94, 96; 174, 176) fait communiquer la première zone et la seconde zone de sorte que du fluide à base pression provenant de la région à basse pression existera sur les surfaces radialement intérieures et extérieures de l'autre bague d'étanchéité et de la bague d'appui.

2. Joint mécanique selon la revendication 1, dans lequel la bague d'appui (40; 132) comporte une surface annulaire (52; 140) exposée au fluide à haute pression dans la région de haute pression (16; 104), et comprend en outre une chambre annulaire (80; 164) entre l'autre bague d'étanchéité (22; 110) et la bague d'appui, et un passage (78; 162) faisant communiquer la chambre annulaire et la région de haute pression pour le passage entre elles du fluide à haute pression.

3. Joint mécanique selon la revendication 2, dans lequel une surface frontale annulaire (26; 114) de l'autre bague d'étanchéité (22; 110) est exposée au fluide à haute pression dans la région de haute pression (16; 104) et une surface arrière annulaire (86; 136) de l'autre bague d'étanchéité définit en outre la chambre annulaire (80; 164).

4. Joint mécanique selon l'une quelconque des revendications précédentes, comprenant en outre un manchon cylindrique d'équilibrage (54; 144) entourant l'arbre (14; 102) en étant espacé de celui-ci, le manchon d'équilibrage ayant une partie à premier diamètre qui supporte la bague d'appui (40; 132) et une seconde partie à diamètre plus grand qui est reçue dans un évidement (60A; 146) ménagé dans le logement (62; 148), les parties à premier et second diamètres définissant une surface annulaire d'épaulement (54A; 144A) exposée au fluide dans la région de haute pression (16; 104) dont la pression de fluide sollicite le manchon d'équilibrage vers l'évidement afin d'assurer son assise dans cet évidement.

5. Joint mécanique selon l'une quelconque des revendications précédentes, comprenant en outre un manchon d'arbre (12; 118) entourant étroitement l'arbre (14; 102), l'autre bague d'étanchéité (22; 110) étant reliée au manchon d'arbre.

6. Joint mécanique selon l'une quelconque des revendications précédentes, dans lequel un passage (94; 174) du moyen de passage (94, 96; 174, 176) est situé dans la bague d'appui (40; 132) pour faire communiquer ses surfaces radialement intèrieure et extérieure l'une avec l'autre pour le passage entre elles du fluide à basse pression.

7. Joint mécanique selon la revendication 6, dans lequel un passage (96) du moyen de passage (94, 96) est situé dans l'élément cylindrique (38) pour faire communiquer la surface radialement extérieure de la bague d'appui (40) avec la surface radialement extérieure de l'autre bague d'étanchéité (22) pour le passage entre elles du fluide à basse pression.

8. Joint mécanique selon l'une quelconque des revendications précedentes, dans lequel l'autre bague d'étanchéité (22) est en carbone et la bague d'appui (40) est en acier.

9. Joint mécanique selon l'une quelconque des revendications 1 à 6, dans lequel un passage (176) du moyen de passage (174, 176) est situé dans l'autre bague d'étanchéité (110) afin de faire communiquer ses surfaces radialement intèrieure et extérieure l'une acec l'autre pour le passage entre elles du fluide à basse pression.

10. Joint mécanique selon l'une quelconque des revendications 1 à 6 ou selon la revendication 9, dans lequel l'autre bague d'étanchéité (110) est une composite de carbone et d'acier.

FIG-1

FIG-2